# EUROPEAN PATENT APPLICATION

(11) **EP 1 758 315 A1**
(43) Date of publication of application: **28.02.2007**
(21) Application number: 05748429.7
(22) Date of filing: 01.06.2005
(51) Int. Cl.: H04L 12/56

(54) **METHOD FOR TRANSFERRING DATA IN ATM COMMUNICATION, AND SYSTEM THEREFOR**

(30) Priority: 01.06.2004 JP 2004162748
(71) Applicant: NEC CORPORATION, Minato-ku, Tokyo 108-8001 (JP)
(72) Inventor: YOSHIDA, Mitsutaka, Minato-ku, Tokyo 1088001 (JP)
(74) Representative: Glawe, Delfs, Moll
(86) International application number: PCT/JP2005/010454
(87) International publication number: WO 2005/119987

(57) **Abstract**

The transmission sequence is matched between the reception side and the transmission side when communication is performed by forming a plurality of transmission bands between shelves each formed of physical layer processing parts (transmission processing parts) and an ATM layer processing part (cell processing part) with the use of a UTOPIA interface. For this purpose, the address monitor part (14) of the transmission side shelf (1) sequentially reads destination addresses of ATM cells transmitted from the master part (11) of the cell processing part and sends the read addresses as cell order signals in the same sequence as they are received, to the cell output switching part (24) of the reception side shelf (2). The cell output switching part (24) releases the mask such that an ATM cell is output by only one of the slave parts (22A; 22B, ...) of the transmission processing parts corresponding to the address received as the cell order signal, while blocking by masking the ATM cell outputs of the slave parts having the other addresses regardless of whether they store ATM cells or not. The destination addresses are assigned to each pair of the slave parts (12A, 22A, 12B, 22B, ...).

## Description

### TECHNICAL FIELD

The present invention relates to a data transfer method and system for use in ATM (Asynchronous Transfer Mode) communication, and particularly to a data transfer method and system for use in ATM communication for transferring data between shelves with the use of ATM cells.

### BACKGROUND ART

ATM apparatuses for multiplexing/demultiplexing ATM cells include an interface standardized between devices and named UTOPIA (Universal Test and Operation PHY (Physical Layer Protocol) Interface for ATM). This interface is proposed by The ATM Forum.

The UTOPIA interfaces are classified into several levels. UTOPIA level 2 among these levels defines an interface principally between a single ATM layer processing part and a plurality of physical (PHY) layer processing parts.

The interfaces up to the ATM layers are standardized, whereas various types of transmission medium are used in the physical layer processing parts. Therefore, the UTOPIA interfaces having high extendibility are employed in a variety of physical layer processing parts. In other words, the extendibility is further improved by using the UTOPIA interface to make clear the boundary between the ATM layer processing part and the physical layer processing parts.

Additionally, mutual communication between a plurality of shelves is made possible by identifying a destination processing device by means of a shelf number of the receiving shelf and a UTOPIA address of an internal modem of the shelf.

In the description hereafter, the single ATM layer processing part is referred to as the UTOPIA master part and the plurality of physical layer processing parts belonging to this master part are referred to as the UTOPIA slave parts.

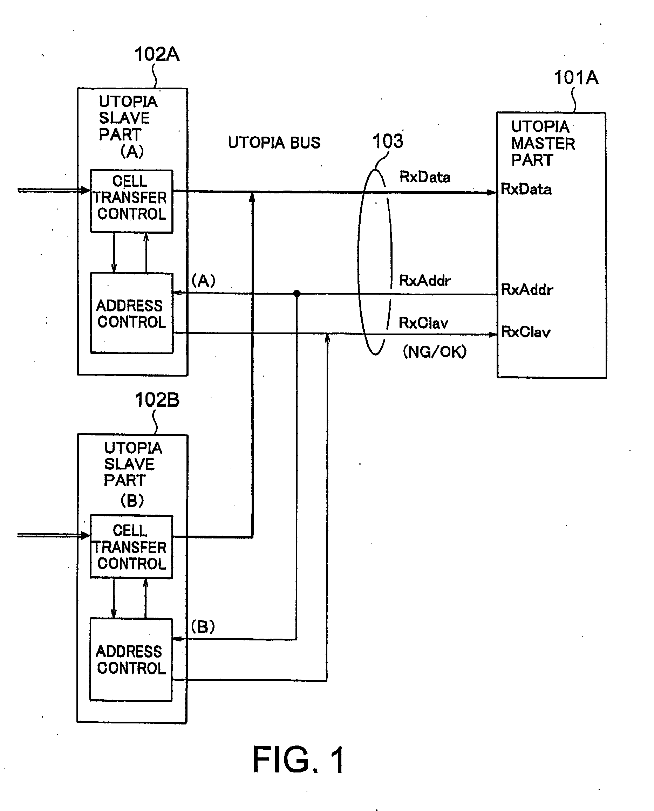

Each shelf has, as shown in Fig. 1 for example, a UTOPIA master part (hereafter, abbreviated as the master part) 101 and two UTOPIA slave parts (hereafter, abbreviated as the slave parts) 102. Functional portions in the shelf are connected via a UTOPIA bus 103. Each slave part 102 has a serial conversion function for communication between the shelves. Fig. 1 shows the connection in the shelf only on the reception side of the master part 101.

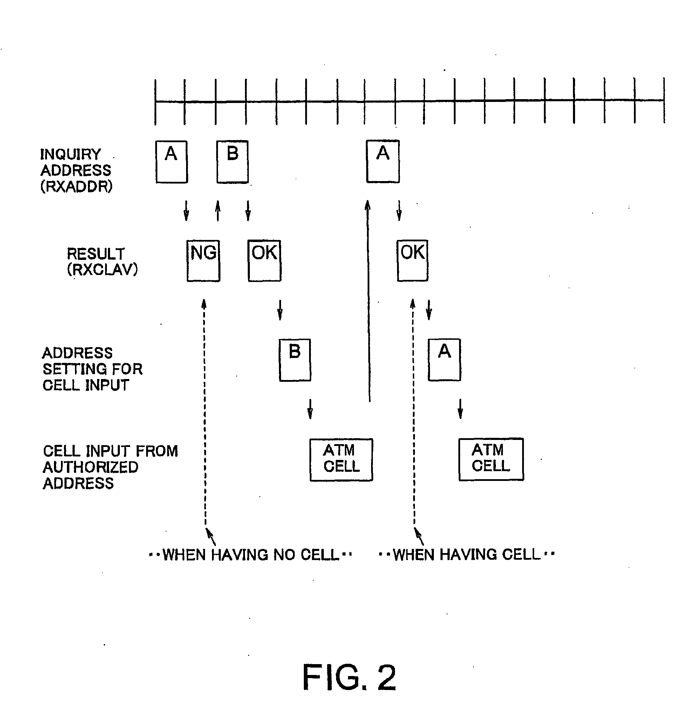

In other words, Fig. 1 shows a principal circuit of the part of the master part 101 receiving ATM cell data received by the slave parts 102. Fig. 2 is a diagram for explaining operation when the two slave parts 102 are assigned with addresses A and B, respectively.

In the figures, "RxData" denotes a reception data signal of an ATM cell received by the master part 101 from the slave parts 102. "RxAddr" denotes a reception address signal for selecting a source slave part 102 of an ATM cell received by the master part 101, "RxAddr" being sent from the master part 101 to the slave parts 102. The two slave parts 102 are assigned with addresses A and B, respectively. "RxClav" denotes a signal indicating condition of a cell storage buffer of each slave part 102. Accordingly, an "RxClav" signal of "OK" is sent from the slave part 102 to the master part 101 in the condition where the cell storage buffer holds an ATM cell, or the slave part 102 holds an ATM cell to be received by the master part 101.

A description will be made of reception steps with reference to Figs. 1 and 2.

The master part 101 implements polling processing alternately on the slave part (A)102 and the slave part (B)102 by using a "RxAddr" signal (A) or (B) to check whether the slaves parts have an ATM cell to be transferred to the master part 101. In the first checking step using the "RxAddr" signal A, the slave part (A)102 has no cell to be transmitted and hence outputs an "RxClav" signal of "NG". Accordingly, the master part 101 proceeds to the next checking step. In the next checking step using an "RxAddr" signal B, it is determined that an "RxClav" signal of "OK is output by the slave part (B)102. Accordingly, the master part 101 sets the address of the slave part (B)102 and receives the ATM cell by means of the "RxData".

In the case where the shelves are physically divided in the data transfer system for ATM communication as described above, each of the slave parts 102 sequentially stores ATM cells received from other shelves in the buffer. For example, when there is a large quantity of data to be transferred between specific shelves or in the communication system as a whole, the transmission band must be increased for the data transfer between the shelves. When data is transferred from one shelf to the other shelf in this condition, it is possible to double the band for example by connecting one UTOPIA slave part to the other in parallel.

However, the ATM communication involves asynchronous transfer, in which information is transferred randomly and not periodically. This may entail a problem that the sequence of the ATM cells at the time when they are received by the reception side is possibly changed from the sequence when they are output from the transmission side, depending on the reception condition of the UTOPIA slave parts.

As described above, the received ATM cell is identified only by the shelf number of the receiving shelf and the UTOPIA address of the internal modem of the shelf. Using such system, cells sent from a same shelf are sometimes received by different slave parts within a single shelf. In this case, it is impossible to determine the transmission sequence of the ATM cells stored in the different slave parts on the transmission side. This means that the system, in which the slave parts are sequentially polled, has a disadvantage that the cells are stored in the master part in a different sequence from that on the transmission side.

### DISCLOSURE OF THE INVENTION

### Problems To Be Solved by The Invention

When mutual communication is performed between a plurality of shelves each of which is formed of an ATM layer processing part and a physical layer processing part with the use of a UTOPIA interface, the reception side will not be able to determine the transmission sequence on the transmission side if a plurality of transmission bands are formed between the two shelves. This is a problem to be solved by the invention.

### Means for Solving The problems

A data transfer method according to the present invention is a method of transferring data formed into ATM cells between shelves each having an ATM layer processing part (cell processing part) and physical layer processing parts (transmission processing parts) connected with the use of a UTOPIA level 2, with a plurality of paths.

A principal feature of the present invention resides in the fact that, when a plurality of transmission bands are formed between the shelves, cell order signals of ATM cells transferred to the physical layer processing parts corresponding to the respective transmission bands are sent from the transmission side shelf to the reception side shelf so that the reception side is enabled to check the transmission sequence of the cells on the transmission side. In the reception side shelf, the received ATM cells are transferred to the ATM layer processing part from the physical layer processing parts which are sequentially selected according to the cell order signals.

This configuration enables the reception side shelf to check the transmission sequence from the physical layer processing parts on the transmission side with the use of the cell order signals, and hence to sequentially select and correctly receive ATM cells from the plurality of physical layer processing parts. This means that, the ATM cell is designed such that the destination physical layer processing part thereof can be identified by means of the shelf number of the reception side shelf and the UTOPIA address of the physical layer processing part in that shelf. Accordingly, the cell order signals can be used as the addresses of the physical layer processing parts contained in the transferred ATM cells. This means that the transfer sequence of the ATM cells transferred to the physical layer processing parts having the same address is not changed. Accordingly, the reception side is allowed to sequentially receive the ATM cells in the correct transmission sequence by means of the addresses of the physical layer processing parts. As a result, the generation and processing of the cell order signals can be simplified.

Each of the cell order signals using the addresses is able to designate a physical layer processing part in the reception side shelf by means of the address of the cell order signal. Therefore, it is possible to mask to block ATM cell outputs from the physical layer processing parts other than the designated physical layer processing part. The ATM layer processing part retrieves the ATM cell that is the first in the sequence held by the physical layer processing parts. As a result, the reception side shelf, receiving a cell order signal, releases the mask of the ATM cell output of only the physical layer processing part corresponding to the received cell order signal, for the ATM layer processing part. Accordingly, there is no necessity to change the hardware configuration or software steps of the ATM layer processing part in the shelf shown in Figs. 1 and 2.

The specific configuration for setting a sequence includes an address monitor part provided in the transmission side shelf. The address monitor part monitors ATM cells transmitted by the ATM layer processing part to retrieve the addresses thereof. Subsequently, the address monitor part sequentially transmits the addresses to the receiving shelf as cell order signals. The reception side shelf is provided with a cell output switching part. The cell output switching part receives the cell order signals and releases the mask of the ATM cell output of only the physical layer processing part holding the ATM cell to be transferred, for ATM layer processing part. Accordingly, the ATM layer processing part is enabled to read the ATM cells from the physical layer processing part holding the ATM cells to be transferred in the correct sequence.

When releasing the mask of the physical layer processing part only, it is easy to mask all of the other physical layer processing parts than the physical layer processing part holding the ATM cell to be transferred. This is preferable since novel functions can be added without requiring significant change in the configuration shown in Fig. 1. However, it is also possible to employ a method of masking the output of a physical layer processing part when the physical layer processing part holds an ATM cell, and releasing the mask when the physical layer processing part is designated as a destination of transfer.

According to the data transfer method and system for use in ATM communication according to the present invention, the reception side receives the transmission sequence from the transmission side, and the ATM layer processing part reads the ATM cells received by the physical layer processing parts in accordance with the transmission sequence. Therefore, the configuration of the present invention has an advantage that the ATM layer processing part is able to reliably receive the ATM cells in the same sequence as they are transmitted on the transmission side.

Additionally, the addresses of the physical layer processing parts are used as transmission order signals, and in the reception side, the ATM cell outputs of the physical layer processing parts other than the physical layer processing parts corresponding to the addresses are masked. This configuration makes it possible to add novel functions without requiring significant change in the configuration shown in Fig. 1.

### BRIEF DESCRIPTION OF THE DRAWINGS

Fig. 1 is a block diagram for explaining a related art of the present invention and illustrating an example of a principal connection circuit which connects, by a UTOPIA interface, between a master part and slave parts on the reception side in a shelf;
Fig. 2 is an explanatory diagram illustrating an example of operational steps for polling of the master part shown in Fig. 1;
Fig. 3 is an explanatory diagram illustrating block configuration of an embodiment of a data transfer system for use in ATM communication according to the present invention;
Fig. 4 is a flowchart illustrating the principal operational steps of the cell output switching part shown in Fig. 3;
Fig. 5A is an explanatory diagram illustrating the embodiment in the condition where three transfer data are generated in the shelf 1 shown in Fig. 3;
Fig. 5B is an explanatory diagram illustrating the embodiment in the condition subsequent to that in Fig. 5A;
Fig. 5C is an explanatory diagram illustrating the embodiment in the condition subsequent to that in Fig. 5B;
Fig. 5D is an explanatory diagram illustrating the embodiment in the condition subsequent to that in Fig. 5C;
Fig. 5E is an explanatory diagram illustrating the embodiment in the condition subsequent to that in Fig. 5D, at the time when the third data is transmitted;
Fig. 6A is an explanatory diagram illustrating the embodiment in the condition where transferred data are input to the shelf 2 shown in Fig. 3;
Fig. 6B is an explanatory diagram illustrating the embodiment in the condition subsequent to that in Fig. 6A;
Fig. 6C is an explanatory diagram illustrating the embodiment in the condition subsequent to that in Fig. 6B;
Fig. 6D is an explanatory diagram illustrating the embodiment in the condition subsequent to that in Fig. 6C;
Fig. 6E is an explanatory diagram illustrating the embodiment in the condition subsequent to that in Fig. 6D;
Fig. 6F is an explanatory diagram illustrating the embodiment in the condition subsequent to that in Fig. 6E, at the time when the third data is stored in the master part; and
Fig. 7 is an explanatory diagram illustrating an example of the operational steps for polling of the master part in the shelf 2 shown in Fig. 3.

### BEST MODE FOR CARRYING OUT THE INVENTION

The present invention relates to a system for performing communication between shelves through a plurality of paths, in which each shelf is formed by an ATM layer processing part (cell processing part) and physical layer processing parts (transmission processing parts) with the use of a UTOPIA interface. It is an object of the present invention to enable the reception side to determine a transmission sequence on the transmission side when a plurality of transmission bands are formed between two shelves. Specifically, the present invention relates to the system in which the plurality of transmission bands between the shelves are transmitted by the physical layer processing parts, respectively, ATM cells processed in a sequence by the transmission side ATM layer processing part are allocated to the physical layer processing parts, and are again processed in a sequence by the reception side ATM layer processing part.

In order to achieve the object, cell order signals of the ATM cells to be transferred are sent from the transmission side shelf to the reception side shelf. The cell order signals thus sent are addresses corresponding to the respective physical layer processing parts supporting the respective transmission bands. Accordingly, the reception side shelf selects the physical layer processing parts sequentially according to the cell order signals. This makes it possible to transfer the ATM cells received by the selected physical layer processing parts to the ATM layer processing part in a correct sequence. This configuration of the invention achieves the object above without involving significant change in the hardware shown in Fig. 1 or the software for implementing the processing shown in Fig. 2.

### First embodiment

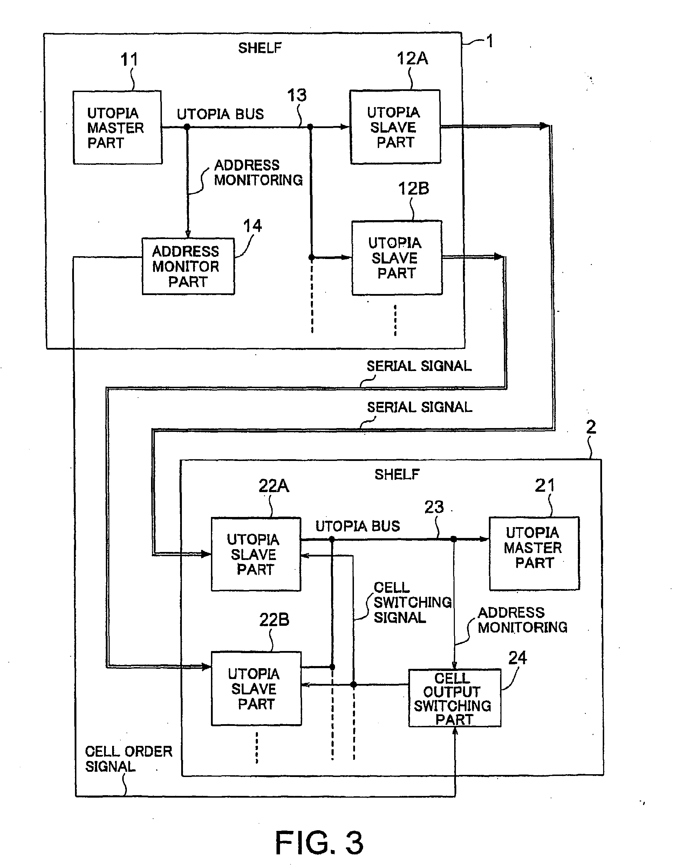

A first embodiment of the present invention will be described with reference to Fig. 3.

Fig. 3 is an explanatory diagram illustrating block configuration of a data transfer system for ATM communication according to an embodiment of the present invention. In Fig. 3, a transmission side shelf 1 is connected to a reception side shelf 2 with a plurality of transmission bands.

The transmission side shelf 1 has one UTOPIA master part (hereafter, referred in short as the master part) 11 formed by an ATM layer processing part, a plurality of UTOPIA slave parts (hereafter, referred in short as the slave parts) 12A, 128, ... formed by physical layer processing parts, a UTOPIA bus 13, and an address monitor part 14. The master part 11 and the slave parts 12A, 12B, ... are connected by the UTOPIA bus 13. The address monitor part 14 is connected to the UTOPIA bus 13 to monitor ATM cells sequentially transferred onto the UTOPIA bus 13 and sequentially read destination addresses. The destination address, which is for example an address of the slave part 12A or the slave part 12B, is notified to the reception side shelf 2 as a cell order signal.

The reception side shelf 2 has one UTOPIA master part 21, a plurality of UTOPIA slave parts 22A, 22B, ..., a UTOPIA bus 23, and a cell output switching part 24. The master part 21 and the slave parts 22A, 22B, ... are connected by a UTOPIA bus 23. Upon receiving the cell order signal from the transmission side shelf 1, the cell output switching part 24 is connected to the slave parts 22A, 22B, ... to send them a cell switching signal.

In the shelf 1, the master part 11 sends ATM cells via the UTOPIA bus 13. The master part 11 causes the slave parts 12A, 12B, .... corresponding to the destination addresses contained in header information of the ATM cells to receive and hold the ATM cells. The slave part 12A for example receives an ATM cell having an address A, converts the same from a UTOPIA signal into a serial signal, and sends the serial signal to the shelf 2 by using one of the transmission bands. The address monitor part 14 monitors the ATM cells on the UTOPIA bus 13. The address monitor part 14 sequentially reads and stores the address values of the transferred ATM cells, and notifies the address values to the cell output switching part 24 in the sequence they are read.

In the shelf 2, the slave part 22A for example receives the ATM cell assigned with the address A from the slave part 12A of the shelf 1 by means of the serial signal using the transmission band. The slave part 22A converts the serial signal into a UTOPIA signal by releasing the mask of the RxClav signal and sends the UTOPIA signal with the address A assigned thereto onto the UTOPIA bus 23. On the other hand, an ATM cell assigned with the address B is sent from the slave part 12B as a serial signal and received by the slave part 22B. Based on the cell order signal received from the address monitor part 14, the cell output switching part 24 controls the cell switching signal so as to release the mask of one of the slave parts 22A, 22B, ... corresponding thereto. This means that the cell switching signal sets the transfer sequence for the ATM cells to be transferred to the master part 21.

When the slave part 22A outputs an ATM cell, for example, the cell switching signal of the output switching part 24 releases the mask of the RxClav signal corresponding to the address A of the slave part 22A. The cell switching signal masks the RxClav signals of the other addresses, if necessary. In this condition, the slave part 22A the mask of which is released sends the ATM cell to the master part 21. In this manner, the masking condition of each RxClav signal is set according to the sequence of the addresses received. As a result, the ATM cells are received by the master part 21 with the sequence when they are transferred being held correctly.

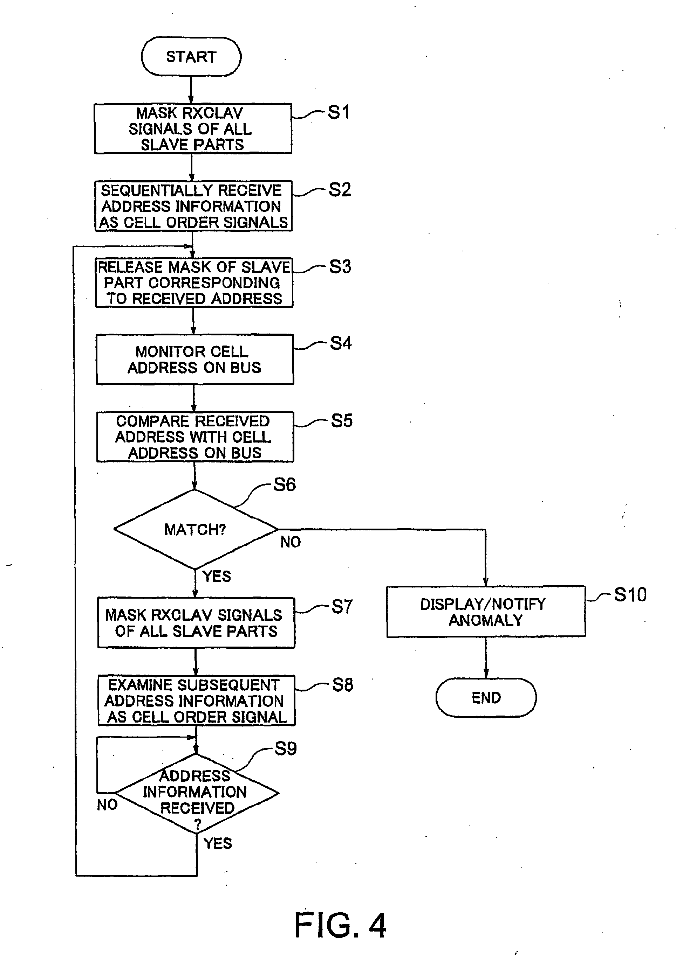

Referring to the flowchart of Fig. 4 in addition to Fig. 3, a description will be made of principal operational steps of the cell output switching part 24.

The cell output switching part 24 masks the RxClav signals of all the slave parts 22A, 22B, ... in its initial state (step S1). This is for the reason of preventing the master part 21 from erroneously accessing a slave part holding an ATM cell which is not to be transmitted yet according to a transmission sequence. The cell output switching part 24 sequentially receives address information as cell order signals (step S2). The cell output switching part 24 releases the mask of the slave part corresponding to the first address received (step S3). Subsequently, the cell output switching part 24 monitors the ATM cell transferred onto the UTOPIA bus 23 (step S4) to obtain an address thereof, and compares the address thus obtained with the addresses received as the cell order signals (step S5).

On the other hand, the master part 21 performs polling on the slave parts 22A, 22B, ... in the same manner as in Fig. 1. Specifically, the master part 21 sequentially checks the "RxAddr" signals to determine whether they have an ATM cell or not. When it is determined at the checking of the first "RxAddr" signal A that the slave part 22A has no cell to transmit, "NG" is indicated by an "RxClav" signal due to the output blocking by the mask. Accordingly, the master part 21 proceeds to checking of the subsequent slave part 22B. When the slave part 22B outputs an "RxClav" signal indicating "OK" at the checking of the subsequent "RxAddr" signal B due to the release of the mask, the master part 21 sets the address on the slave part 22B to cause the same to send an ATM cell as an "RxData" signal.

For example, the cell output switching part 24 receives address information of the slave part 22B as the first cell order signal in the step S2 described above. In this case, the cell output switching part 24 releases the mask of the slave part 22B, and hence an ATM cell having address information of the slave part 22B is transferred.

Accordingly, the cell output switching part 24 determines that the addresses match as the result of the comparison in the step S5 above (YES in step S6). Subsequently, the cell output switching part 24 masks the "RxClav" signals of all the slave parts 22A, 22B, ... (step S7) and examines the next address information of the cell order signal (step S8). If the next address information is received (YES in step S9), the processing returns to the step S3 to release the mask of the slave part corresponding to the received address. This means that the mask release is performed based on the cell order signals received sequentially. If it is determined "NO" in the step S6 above, it means to be an abnormal condition. Accordingly, a step S10 is implemented to display or notify the abnormal condition in a predetermined manner.

The description above has been made on the assumption that the cell output switching part 24 initially masks the "RxClav" signals of all the slave parts 22A, 22B,.... Upon receiving an address of a slave part by means of a cell order signal, the cell output switching part 24 releases the mask of the "RxClav" signal of the slave part corresponding to the received address, in cooperation with the master part 21. However, the cell output switching part 24 may instead be designed to mask the "RxClav" signals of the slave parts corresponding to the other addresses than the received address.

In this manner, by masking the "RxClav" signals in the sequence of addresses, the ATM cells can be input to the master part 21 with the sequence of the ATM cells held correctly.

Referring to the drawings and giving a specific example, a description will be made of the flow of data formed into ATM cells and transferred from the master part 11 of the shelf 1 to the master part 21 of the shelf 2. The shelf 1 and the shelf 2 are connected in duplex fashion using two transmission bands. The slave part 12A and the slave part 22A are assigned with an address A. The slave part 12B and the slave part 22B are assigned with an address B. The slave parts having a same address are mutually connected by a medium transmitted as a serial signal. The ATM cells to be transferred consist of three data: data 1 having the address B, data 2 having the address B, and data 3 having the address A. These three data are transmitted from the master part 11 in this sequence.

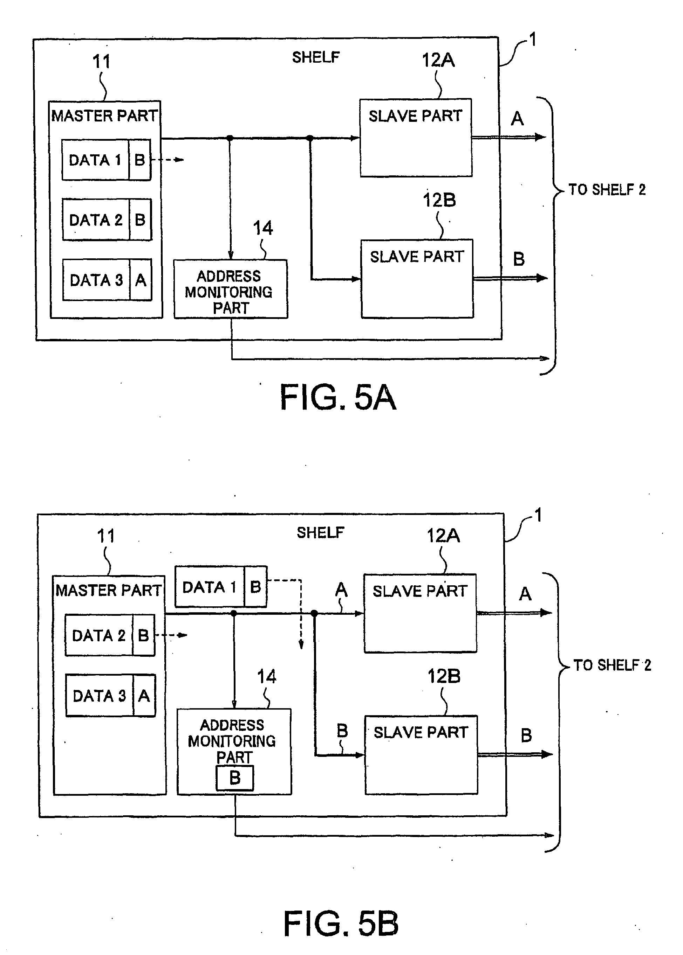

Firstly, referring to Figs. 5A to 5E in addition to Fig. 3, a description will be made of motion of the data 1 to 3 within the transmission side shelf 1.

In Fig. 5A, the data 1 to 3 formed into ATM cells are held in the master part 11. In this condition, the first data 1 is transmitted from the master part 11 onto the UTOPIA bus 13.

In Fig. 5B, the transmitted data 1 is received by the slave part 12B according to the address B that the data 1 has. On the other hand, the subsequent data 2 is transmitted from the master part 11. At this moment, the address B of the data 1 is read by the address monitor part 14, and sent to the data destination, the cell output switching part 24 of the shelf 2.

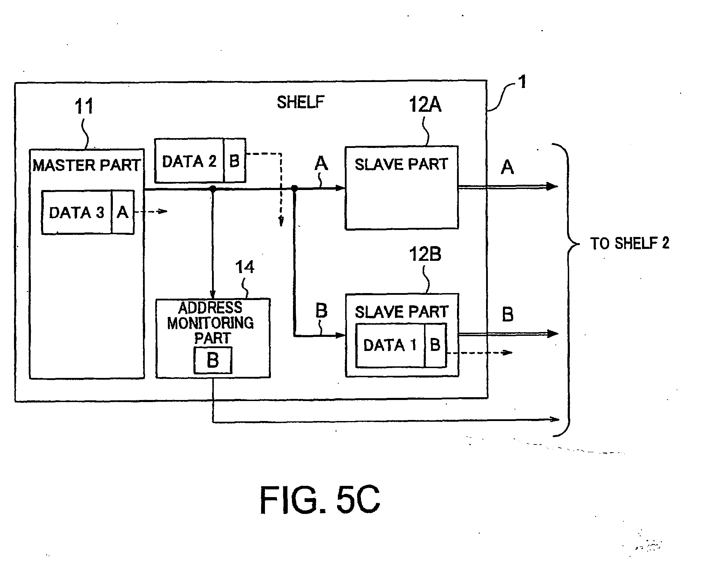

In Fig. 5C, the data 1 received by the slave part 12B is transmitted to the shelf 2. The data 2 transmitted from the master part 11 is received by the slave part 12B according to the address B that the data 2 has. At this moment, the address B of the data 2 is read by the address monitor part 14 and transmitted to the data destination, the cell output switching part 24 of the shelf 2. The subsequent data 3 is transmitted from the master part 11.

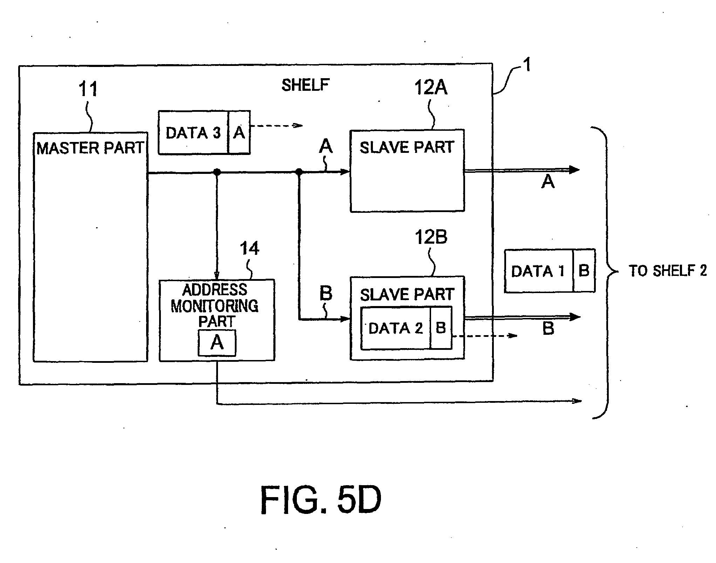

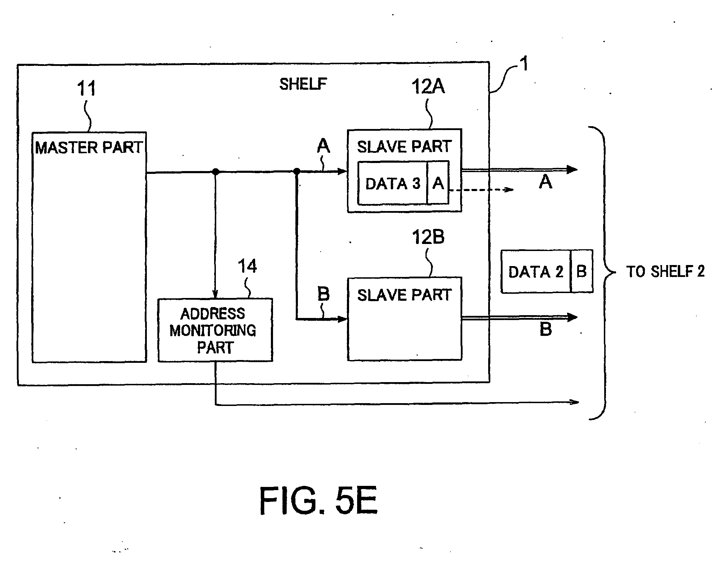

In Fig. 5D, the data 2 received by the slave part 12B is transmitted to the shelf 2. The data 3 transmitted from the master part 11 is received by the slave part 12A according to the address A that the data 3 has. At this moment, the address A of the data 3 is read by the address monitor part 14 and transmitted to the data destination, the cell output switching part 24 of the shelf 2.

In Fig. 5E, the data 3 received by the slave part 12A is transmitted to the shelf 2.

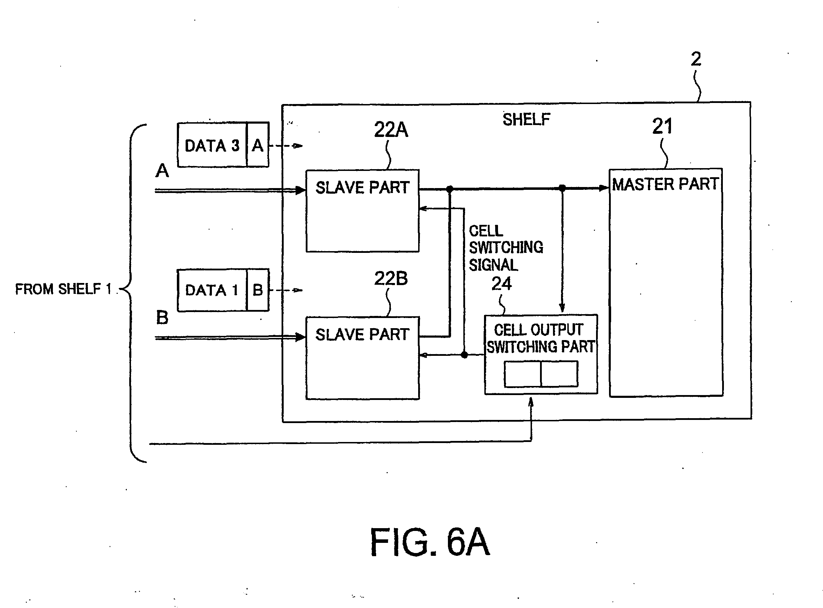

Referring to Figs. 6A to 6F in addition to Fig. 3, a description will be made of motion of the data 1 to 3 within the reception side shelf 2.

In Fig. 6A, the data 3 having the address A is received by the slave 22A. Further, the data 1 having the address B is received by the slave part 22B.

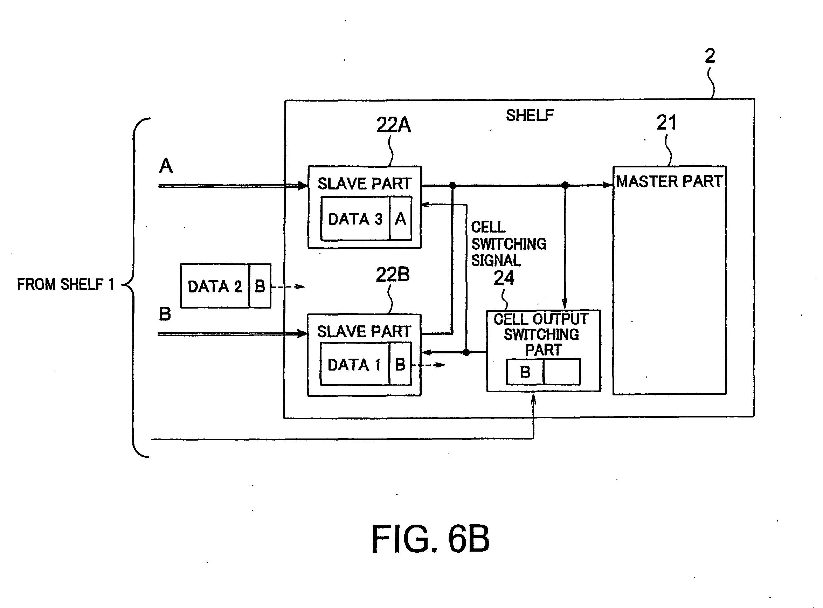

Accordingly, in Fig. 6B, the data 3 having the address A is stored in the slave 22A, while the data 1 having the address B is stored in the slave part 22B. On the other hand, the cell output switching part 24 receives the first cell order signal of the address B from the address monitor part 14 of the shelf 1. Accordingly, the cell output switching part 24 releases the mask of the "RxClav" signal of the slave part 22B, while masking the "RxClav" signal of the slave part 22A. As a result, the data 1 in the slave part 22B is read by the master part 21. Subsequently, the data 2 having the address B is received by the slave part 22B.

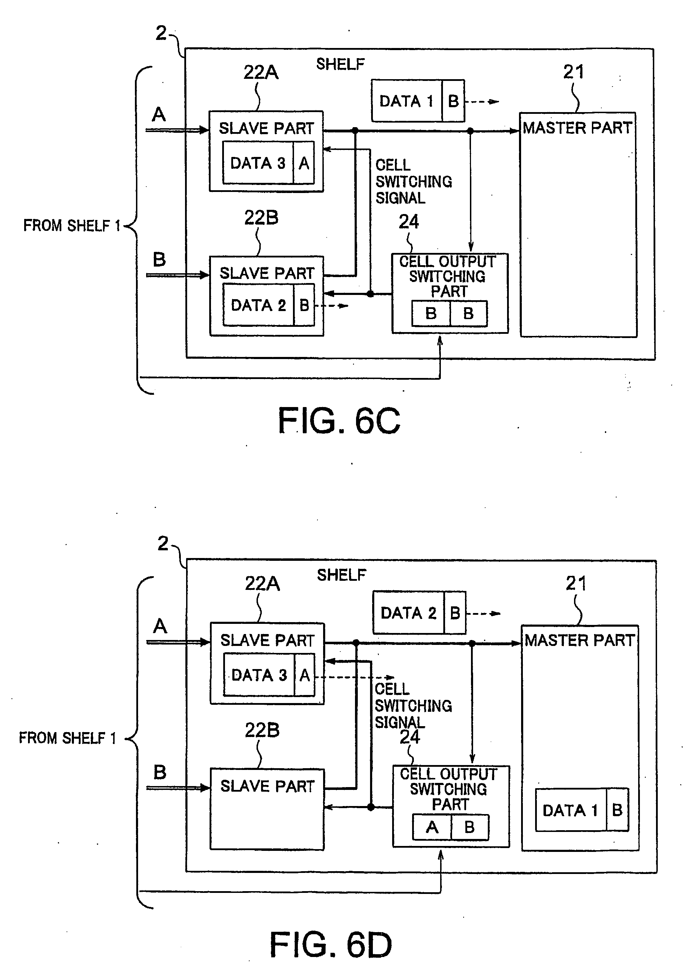

In Fig. 6C, the data 2 is newly stored in the slave part 22B. The precedent data 1 is on the UTOPIA bus, and the address thereof is checked by the cell output switching part 24. On the other hand, the cell output switching part 24 receives the subsequent cell order signal of the address B from the address monitor part 14 of the shelf 1. Accordingly, the cell output switching part 24 releases the mask of the "RxClav" signal of the slave part 22B, while masking the "RxClav" signal of the slave part 22A. As a result, the data 2 in the slave part 22B is read by the master part 2.

In Fig. 6D, the data 1 is stored in the master 21 from the UTOPIA bus. The data 2 is on the UTOPIA bus, and the address thereof is checked by the cell output switching part 24. On the other hand, the cell output switching part 24 receives the subsequent cell order signal of the address A from the address monitor part 14 of the shelf 1. Accordingly, the cell output switching part 24 releases the mask of the "RxClav" signal of the slave part 22A, while masking the "RxClav" signal of the slave part 22B. As a result, the data 3 in the slave part 22A is read by the master part 21.

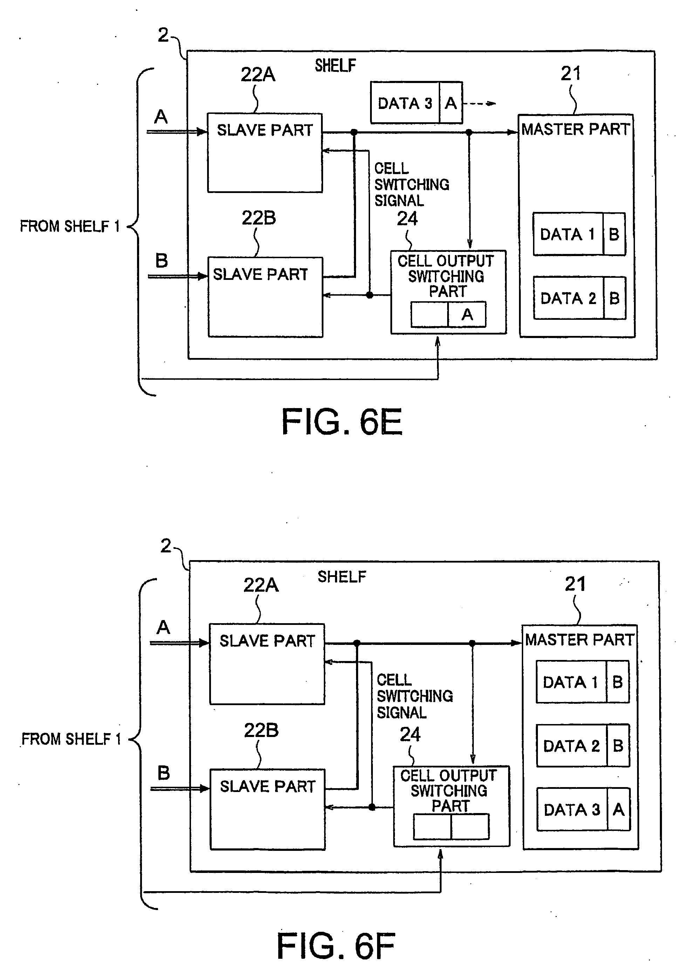

In Fig. 6E, the data 2 is stored in the master 21 from the UTOPIA bus. The data 3 is on the UTOPIA bus, and the address thereof is checked by the cell output switching part 24.

In Fig. 6F, the data 3 is stored in the master 21 from the UTOPIA bus.

According to the steps as described above, the reception side master part 21 in the shelf 2 is able to receive the data 1, 2 and 3 in the same sequence as they are transmitted by the transmission side master 11.

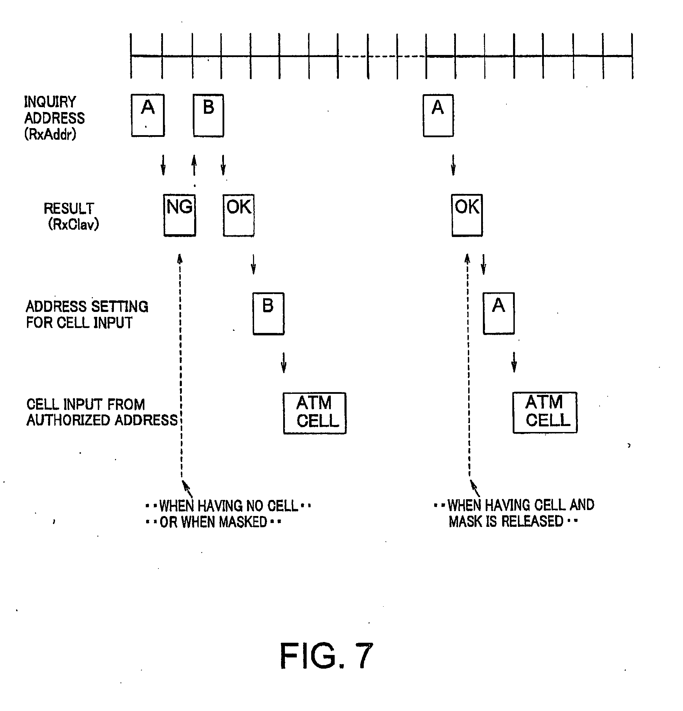

Referring to Fig. 7 in addition to Fig. 3, a description will be made of the ATM cell reception operation of the master part 21 in the reception side shelf 2.

When receiving an ATM cell, the master part 21 makes an inquiry to the slave part 22B for example by means of an "RxAddr" signal whether or not the slave part has an ATM cell. If the slave part 22B has an ATM cell, a response of "OK" is returned to the master part 21 by means of an "RxClav" signal. Upon receiving the response of "OK" from the slave part 22B, the master part 21 sets the address B of the slave part 22B that has replied "OK" at the subsequent clock to receive the ATM cell from the slave part 22B.

If the slave part 22A has no ATM cell, for example, an "RxClav" signal indicating "NG" is returned. Upon receiving the response of "NG" from the slave part 22A, the master part 21 then makes an inquiry to the slave part 22B at the subsequent clock whether the slave part 22B has an ATM cell, by using an "RxAddr" signal.

In this manner, the master part 21 implements so-called polling processing on the slave parts 22A, 22B, ..... During this polling processing, an "RxClav" signal indicating "NG" is returned from a slave part when the slave part is masked by the control of the cell output switching part 24 even if it has an ATM cell. Upon receiving the response of "NG", the master part 21 determines that the slave part has no ATM cell, and will not call the slave parts having the address that has replied "NG". This is similar polling processing to that of Fig. 2 described above. As a result, the master part 21 is able to receive an ATM cell only from a slave part which returns a response of "OK", the mask thereof being released according to the sequence

When employing a transmission band multiplexing configuration in which a plurality of slave parts are associated between two shelves, the group of the slave parts on the transmission side is provided with an address monitor part, and the group of the slave parts on the reception side is provided with a cell output switching part. The address monitor part notifies the sequence of addresses on the transmission side to the reception side, and the cell output switching part sequentially releases only the masks of the slave parts matching the addresses on the reception side. According to this configuration, the reception side master part is enabled to receive the ATM cells received by the reception side slave parts in the same sequence as on the transmission side without requiring significant change in the configuration as described above.

### Other Embodiments

Although the shelf 1 is shown as being connected only to the shelf 2 in Fig. 3 showing the first embodiment, the transmission side shelf 1 transmits ATM cells also to other reception side shelves other than the shelf 2. Accordingly, the address monitor part sequentially transmits cell order signals grouped for each of the reception side shelves. This means that the address monitor part sequentially transmits cell order signals each having a same address among the addresses corresponding to the reception side shelves, to the cell output switching part of the relevant shelf.

Alternatively, the address monitor part may be of a single function type effective for each of the shelves. In this case, the address monitor part is provided for each of the reception side shelves, only when a multiplexing transmission band is formed with the shelves to be connected.

The reception side shelf 2 shown in Fig. 3 also receives ATM cells from other transmission side shelves than the shelf 1. If any of the shelves has a band multiplexing connection for transmission bands, the cell output switching part also receives cell order signals from the address monitor part of that shelf. The cell output switching part is able to determine a slave part based on the received address, and hence the master part is allowed to release the mask of the determined slave part to read an ATM cell stored therein.

The configuration as described above requires the polling processing of the master part to be supported and implemented. Therefore, in the reception side shelf, a slave part having multiplexed transmission bands is prepared to return "NG" by means of an "RxClav" signal even if it stores an ATM cell. This "NG" is released only by instruction from the cell output switching part. In contrast, the slave parts having no multiplexed transmission band require no special processing.

### INDUSTRIAL APPLICABILITY

When two devices are multiplexed with a plurality of transmission bands provided in parallel, the transmission sequence of data transmitted from the transmission side is notified to the reception side by means of transmission band information. The reception side is able to easily restore the transmission sequence by using the transmission band information. This configuration of the present invention is applicable to various applications in asynchronous data transmission where the increase of the transmission capacity is required and securing of the transmission sequence of data is indispensable, while requiring no significant change in the configuration as described in relation to the prior arts.

## Claims

1. A data transfer method for use in ATM communication for transferring data between two shelves by forming a plurality of transmission bands in parallel for increasing the transmission capacity of ATM cells, wherein cell order signals of ATM cells transferred to transmission processing parts corresponding respectively to the plurality of transmission bands are transmitted from the transmission side shelf to the reception side shelf, and the reception side shelf associates the received ATM cells with the transmission processing parts and then transfers the ATM cells to a cell processing part by sequentially selecting the transmission processing parts in accordance with the cell order signals.

2. The data transfer method for use in ATM communication according to Claim 1, wherein the transmission processing parts are physical layer processing parts and the cell processing part is an ATM layer processing part, the former and latter parts being connected with the use of a UTOPIA level 2.

3. The data transfer method for use in ATM communication according to Claim 2, wherein the address of a physical layer processing part contained in the transferred ATM cell is used as the cell order signal.

4. The data transfer method for use in ATM communication according to Claim 3, wherein, in the reception side shelf, the mask of the ATM cell output of only the physical layer processing part designated by the address of the cell order signal is released for the ATM layer processing part.

5. The data transfer method for use in ATM communication according to Claim 3, wherein, for the ATM layer processing part in the reception side shelf, the ATM cell outputs of the other physical layer processing parts than the physical layer processing part designated by the address of the cell order signal are blocked by masking.

6. A data transfer system for use in ATM communication for transferring data between shelves each having transmission processing parts corresponding to transmission bands and a cell processing part for processing transferred ATM cells by forming a plurality of transmission bands in parallel for increasing the transmission capacity of ATM cells, the system comprising:
an address monitor part provided in the transmission side shelf for monitoring ATM cells sequentially transmitted to the transmission processing parts respectively corresponding to the plurality of transmission bands to retrieve addresses thereof and to sequentially transmit these addresses as cell order signals to the reception side shelf; and
a cell output switching part provided in the reception side shelf for sequentially receiving the cell order signals, and sequentially switching the cell processing parts such that the mask is released from the ATM cell output of only the transmission processing part which receives and holds the ATM cell to be transferred based on the address of the cell order signal.

7. The data transfer system for use in ATM communication according to Claim 6, wherein the transmission processing parts are physical layer processing parts and the cell processing part is an ATM layer processing part, the former and latter parts being connected with the use of a UTOPIA level 2.

8. The data transfer system for use in ATM communication according to Claim 7, wherein the cell output switching part blocks, by masking, the ATM cell output of the physical layer processing parts forming the plurality of transmission bands, and releases the mask by sequentially switching to only the physical layer processing part to which the ATM cell is to be transferred.

9. A data transfer system for use in ATM communication for transferring data formed into ATM cells between shelves each having an ATM layer processing part and a plurality of physical layer processing parts connected with the use of a UTOPIA level 2 by forming a plurality of transmission bands, the system comprising:
an address monitor part provided in the transmission side shelf for monitoring ATM cells transmitted from the ATM layer processing part to retrieve addresses thereof and to sequentially transmit these addresses to the reception side shelf as cell order signals; and
a cell output switching part provided in the reception side shelf for receiving the cell order signals and notifying the ATM layer processing part of the physical layer processing part holding the ATM cell to be transferred based on the address of the cell order signal,
wherein upon receiving the notification of the physical layer processing part from the cell output switching part, the ATM layer processing part in the reception side shelf reads and processes the ATM cell held in the physical layer processing part according to the notification.
